# EUROPEAN PATENT APPLICATION

(11) **EP 3 992 850 A1**
(43) Date of publication of application: **04.05.2022**
(21) Application number: 20204946.6
(22) Date of filing: 30.10.2020
(51) Int. Cl.: G06K 9/62, G06K 9/00

(54) **METHOD AND SYSTEM FOR FEATURE DETECTION IN IMAGING APPLICATIONS**

(71) Applicant: Friedrich-Alexander-Universität Erlangen-Nürnberg, 91054 Erlangen (DE); Innovation Network for Advanced Materials (INAM), 10115 Berlin (DE); Luxembourg Institute of Science and Technology (LIST), 4362 Esch-sur-Alzette (LU); VITO NV, 2400 Mol (BE)
(72) Inventor: MILL, Leonid, 91052 Erlangen (DE); WOLFF, David, 90762 Fürth (DE); CHRISTIANSEN, Silke, 91054 Buckenhof (DE); PHILIPP, Patrick, 4362 Esch-sur-Alzette (LU); GERRITS, Nele, 3350 Linter (BE); KLING, Lasse, 91054 Erlangen (DE); MAIER, Andreas, 91054 Erlangen (DE); SYBEN, Christopher, 90556 Cadolzburg (DE); WÜRFL, Tobias, 91052 Erlangen (DE)
(74) Representative: Wagner, Jean-Paul

(57) **Abstract**

The invention proposes a method and system for using a machine learning algorithm in the detection of at least one predetermined feature in digital imaging applications. In accordance with the proposed method, large quantities of reliable training data may be generated automatically. This allows to improve the detection performance of deep convolutional neural networks which are trained using the so-generated data, without requiring the actual imaging of manual annotation of large training datasets.

## Description

The project leading to this application has received funding from the European Union's Horizon 2020 research and innovation programme under grant agreement No 720964 and the European Research Council, ERC, under grant agreement No 810316.

### Technical field

The invention lies in the fields of digital imaging, such as optical imaging or imaging using microscopy techniques, including Scanning Electron Microscopy, or Helium Ion Microscopy, HIM, and image data processing. Specifically, the invention relates to a system and a computer implemented method for recognizing information content in digital images that comprise features and background information, using deep learning methods.

### Background of the invention

It is known to consider a digital image as a matrix storing brightness values, for example one brightness value for each pixel composing the image. Image data representing features of the real world contains information, which is easily extracted by the human cognitive brain. However, this task is difficult to solve for a computer system or a machine. In many applications it is useful to automatically extract information content, for example by recognizing particular features, from a digital image.

By way of example, nanoparticles occur in various environments as a consequence of man-made processes, which raise concerns about their impact on the environment and on human health. To evaluate their risk potential, a precise and statistically relevant analysis of the presence of particles and of their features, such as e.g. size, shape, composition, is required. Such an analysis may be based on digital images obtained from samples using nano-imaging techniques. Images comprising representations of particles and/or nano-particles may be analysed to extract information and the relevant features, e.g. type or shape of particles, content therefrom.

The recognized relationship between nanoparticles' physicochemical properties and biological impact at molecular, cellular and systemic level is a main driver for assessing environmental and human health risks, as well as for tailoring efficacy in the case of therapeutic application as bio-specific carrier systems. In these fields, changes in the nanoparticles' physicochemical properties (size, shape, surface chemistry, etc..) occur during their life cycle and in contact with biological systems. These changes also need to be considered when information is to be extracted from images representing such nanoparticles. In addition, current industrial and laboratory processes for synthesis of nanomaterials give rise to significant variability from batch-to-batch, introducing a lack of certainty in their performance for high added-value applications, and in the biological outcome (even if no real hazard is implied). Furthermore, determining the effective nanoparticle exposure dose and fate (i.e. spatial distribution and accumulation in time) is key in establishing the mechanisms and outcomes of biological impact. In order to characterize nanoparticles in a dynamic context and on a case-by-case basis, microscopic imaging techniques such as scanning electron microscopy, SEM, and Helium Ion Microscopy, HIM have been proposed as interesting tools. Given the substantial information content of digital images, these techniques often benefit from, or require, automated high-throughput data analysis that enable to identify thousands of imaged particles with accuracy and in a robust manner.

In other applications, different imaged features need to be distinguished, such as e.g. cells of various nature spread on a surface in a bio-medical experiment or particles on a combustion engine exhaust filter in environmental studies of pollution sources or particles on a technical surface as part of a quality monitoring study in production environments such as for example a wafer fab or a bearing manufacturer site. To evaluate biological processes in cells as an indicator of therapy adherence or manufacturing cleanliness in production processes, the presence of features such as cells in matrices or on surfaces or the presence of particles of any nature (organic, inorganic metal or oxide or other, composite, etc...) on surfaces needs to be statistically and/or quantitatively assessed and described. For that purpose, a precise knowledge of physical properties such as size, shape, composition, surface functionalization, density and the like is required. Such an analysis may be performed automatically provided that the relevant samples are imaged using an adequate technology (microscopy, spectroscopy, ...), and provided that a robust method for recognizing and extracting the relevant features from the digital images is available.

Image analysis through feature recognition is one of the available tools allowing to unlock the statistical information that is contained in a digital image of a sample. It has been proposed to use algorithms in the area of artificial intelligence and machine learning, such as deep learning techniques, to automate object/feature detection tasks in various imaging applications. Generally, the applicability of deep learning techniques to object detection tasks is limited by the amount of representative, experimentally collected and manually annotated training data.

Several approaches have been proposed for automated nanoparticle detection using both traditional algorithms as well as machine learning techniques. However, the approaches known in the art encounter major difficulties, either with regard to irregular object patterns and noise, or they rely on hand-crafted features for particle shapes, which impairs the generalization potential of such algorithms for the characterization of nanoparticles, for example. In order to handle various sizes, shapes and distributions of nanoparticles, more sophisticated image analysis approaches are required.

With the recent advancements in machine learning and mainly deep learning, deep artificial neural networks, ANNs, have been developed, which are able to learn in a supervised fashion from data sets containing millions of images to resolve object detection tasks. When trained on such big data sets, those models are able to achieve task-relevant object detection performances that are comparable or even superior to the capabilities of humans. However, the key problem of using such deep learning methods for nanoparticle detection, or for the detection of other relevant imaged features, is in general the large amount of data that is required to train such networks. In the case of particles or nanoparticles, the features of interest are indeed very small, as they are particles having a small dimension, for example down to several nanometers. A difficulty lies in the acquisition of a representative data set of nanoparticle images, which ideally contain various sizes, shapes and distributions for a variety of nanoparticle types. Extending to other applications including optical imaging, more generally, the main difficulty lies in the obtention of relevant training data, comprising sufficiently large number of labelled features to train the artificial neural network sufficiently well. The hurdle to obtaining training data may be technological, i.e., it may be difficult or costly to acquire the data, or of regulatory nature, i.e., the training data may not be available without violating privacy constraints. Only after the algorithm will have been trained sufficiently well, it will be able to accurately identify the features of choice and to discern these from the surrounding background data, while being robust to possible image artefacts that may obscure the features of choice in an imaging data set.

Additionally, in accordance with known methods, the manual labelling of a sufficiently voluminous acquired training data set is mandatory to obtain the so-called 'ground truth'. Without an appropriately labelled training data set, the artificial neural network will not be capable of recognizing the relevant features in a yet unknown digital image. In practice, the obtention of a 'ground-truth' is a human driven process, which is generally error-prone, time-consuming and costly to obtain.

### Technical problem to be solved

It is an objective of the invention to present a method and a system, which overcome at least some of the disadvantages of the prior art. In particular, the invention aims at providing a method for detecting features in a digital image using a machine learning algorithm, that alleviates the need for acquiring a set of training images from real samples using imaging techniques, and manually labelling these.

### Summary of the invention

In accordance with a first aspect of the invention, a method for detecting at least one representation of a predetermined feature, in a digital image of a sample is provided. The method comprises the steps of:
a) in a training image store, providing a set of training images, wherein each training image comprises at least one labelled representation of said at least one feature;
b) using data processing means, training a machine learning algorithm using said set of training images;
c) detecting a representation of said at least one predetermined feature in said digital image using said trained machine learning algorithm and storing data describing the detected feature representation in a memory element.

The method is further remarkable in that the provision of a set of training images further comprises the steps of:
i) providing at least one digital template, which comprises data indicative of the visual appearance of said at least one predetermined feature that is to be detected, in a template store;
ii) generating, using image generating means, a plurality of synthetic training images based on said at least one digital template, wherein each synthetic training image comprises at least one labelled representation of a feature described by said at least one digital template, and adding the synthetic training images to the set of training images.

Steps i) and ii) may preferably be preliminary steps to step b).

In accordance with another aspect of the invention, a method for detecting at least one representation of a predetermined particle, or nanoparticle, in a digital image of a sample is provided. The method comprises the steps of:
a1) in a training image store, providing a set of training images, wherein each training image comprises at least one labelled representation of said particle or nanoparticle;
b1) using data processing means, training a machine learning algorithm using said set of training images;
c1) detecting a representation of said at least one predetermined particle or nanoparticle in said digital image using said trained machine learning algorithm and storing data describing the detected particle- or nanoparticle-representation in a memory element.

The method is further remarkable in that the provision of a set of training images further comprises the steps of:
i1) providing at least one digital template, which comprises data indicative of the visual appearance of said at least one particle or nanoparticle that is to be detected, in a template store;
ii1) generating, using image generating means, a plurality of synthetic training images based on said at least one digital template, wherein each synthetic training image comprises at least one labelled representation of said predetermined particle or nanoparticle described by said at least one digital template, and adding the synthetic training images to the set of training images.

Steps i1) and ii1) may preferably be preliminary steps to step b1).

Preferably, the data in said digital template may describe the visual appearance that becomes apparent when a corresponding feature is imaged using the imaging technique according to which said digital image has been obtained.

Preferably, the step of generating synthetic training images may further comprise, using said image generating means, generating a background of said synthetic training images, wherein the background emulates the visual appearance of a sample area not showing said predetermined feature, that becomes apparent when a sample or substrate is imaged using the imaging technique according to which said digital image has been obtained.

A synthetic training image may preferably comprise a plurality of representations of said predetermined feature, which are generated by applying geometric transforms to the data comprised in the corresponding digital template. Preferably, a synthetic training image may comprise representations of between one and hundred, between one and a thousand, several hundreds, several thousands or more predetermined features.

The geometric transform may preferably comprise domain randomization, scale variations, rotations, agglomerations, feature shape alterations, and spatial distributions.

Preferably, a synthetic training image may comprise clusters of said predetermined features.

The set of training images may preferably comprise at least one real labelled digital image comprising said predetermined feature, which has been obtained by imaging a sample.

Preferably, the step of detecting said predetermined feature in said digital image may comprise partitioning the digital image into features and background, and labelling each feature using said machine learning algorithm.

It may be preferred that the machine learning algorithm comprises a convolutional neural network algorithm. It may preferably comprise a convolutional deep neural network.

The step of training the machine learning algorithm may preferably comprise generating a plurality of trained candidate algorithms using different training epochs, and selecting one trained candidate algorithm out of said plurality based on an indication of their respective feature detection performance, for carrying out said step of detecting said predetermined feature in said digital image.

The predetermined features may preferably comprise any of a geometrical shape determined by parameters, a representation of a letter of any alphabet, a representation of a number, a representation of a particle or nanoparticle, a representation of a cell, a representation of a crack in a thin film, without being limited thereto.

The digital image may preferably be obtained through secondary ion mass spectrometry, SIMS, scanning transmission ion microscopy, STIM, scanning electron microscopy, SEM, or Helium Ion Microscopy, HIM, or optical microscopy or photography, imaging of a sample comprising particles or nanoparticles.

The digital image may preferably be obtained through secondary ion mass spectrometry, SIMS, scanning transmission ion microscopy, STIM, scanning electron microscopy, SEM, or Helium Ion Microscopy, HIM, or optical microscopy or photography, imaging of a feature such as defects in a matrix, or of any sample comprising features that give rise to a contrast variation.

Preferably, the data in said digital template may describe the visual appearance of a particle or nanoparticle that become apparent when a corresponding particle or nanoparticle is imaged using the imaging technique according to which said digital image has been obtained.

A synthetic training image may preferably comprise at least one three-dimensional representation of the particle or nanoparticle corresponding to said digital template.

A synthetic training image may preferably comprise at least one representation of a feature that gives rise to a contrast variation in the chosen imaging modality, corresponding to said digital template.

The digital template for a particle or nanoparticle may preferably comprise data describing the particle's or nanoparticle's physical properties such as species, composition, size, shape, and texture.

The digital template for a feature do be detected may preferably comprise data describing the imaged feature's contrast features, or its physical properties such as composition, size or shape.

In accordance with another aspect of the invention, a system for detecting a representation of a predetermined feature in a digital image is proposed. The system comprises data processing means that are configured for accessing a training image store that comprises a set of training images, wherein each training image comprises at least one labelled representation of said at least one feature. The device further comprises a memory element for storing said digital image, and image generating means that are configured for accessing a digital template store that comprises at least one digital template storing data that is indicative of the visual appearance of said at least one predetermined feature that is to be detected. The data processing means are configured for:
b) training a machine learning algorithm using said set of training images;
c) detecting a representation of said at least one predetermined feature in said digital image using said trained machine learning algorithm and storing data describing the detected feature representations in a memory element.

Further, the image generating means are configured for:
ii) generating a plurality of synthetic training images based on said at least one digital template, wherein each synthetic training image comprises at least one labelled representation of a feature described by said at least one digital template, and adding the synthetic training images to the set of training images.

In accordance with another aspect of the invention, a system for detecting a representation of at least one particle or nanoparticle in a digital image is proposed. The system comprises data processing means that are configured for accessing a training image store that comprises a set of training images, wherein each training image comprises at least one labelled representation of a particle or nanoparticle. The device further comprises a memory element for storing said digital image, and image generating means that are configured for accessing a digital template store that comprises at least one digital template storing data indicative of the visual appearance of a particle or nanoparticle that is to be detected. The data processing means are configured for:
b1) training a machine learning algorithm using said set of training images;
c1) detecting said particle or nanoparticles in said digital image using said trained machine learning algorithm and storing data describing the detected particles or nanoparticles in a memory element.

Further, the image generating means are configured for:
ii1) generating a plurality of synthetic training images based on said at least one digital template, wherein each synthetic training image comprises at least one labelled representation of a particle or nanoparticle described by said at least one digital template, and adding the synthetic training images to the set of training images.

Preferably, the system may be further configured to carry out any of the method steps in accordance with the first aspect of the invention.

According to yet another aspect of the invention, a computer program comprising computer readable code means is proposed, which, when run on a computer system, causes the computer system to carry out the method according to aspects of the invention.

In accordance with a final aspect of the invention, a computer program product comprising a computer-readable medium is proposed, on which the computer program according to an aspect of the invention is stored.

The proposed invention provides a method and system for detecting any predetermined imaged features, such as for example representations particles or nanoparticles, nanoparticles being a specific example of particles, in a digital image using a machine learning. The invention alleviates the need for actually acquiring a set of training images using imaging techniques, and manually labelling these. In particular, the proposed method provides a flexible and versatile solution to bypass the costly, tedious and error-prone training-data acquisition process from which known methods using machine learning, and in particular deep learning algorithms, suffer. Using a rendering software, it becomes possible to generate an arbitrarily large set of realistic synthetic training images containing representations of potentially multiple types of targeted features (e.g. particles) including different sizes, shapes and distributions thereof. The set of synthetic training images is used for training a state-of-the art deep neural network. The feature detection performance of the so-trained deep neural network is increased without requiring human-curated training data, which is difficult and costly to obtain. The generation of synthetic training images comprising features and background information results in the automatic creation of a labelled ground-truth. Using the approach in accordance with embodiments of the invention, automatic segmentation accuracies on the synthetic training images, that are comparable to man-made annotations for toxicological relevant metal-oxide nanoparticle ensembles, have been obtained. The proposed method resolves the data bottleneck from which known solutions suffer and enables the use of machine learning methods for automated high-throughput feature detection from digital images. This result facilitates for example to studies relating to nano-plastics that currently threaten our environment, or the quality control of solar cell films, or any other applications requiring statistical image analysis and feature (information) extraction from any digital image modality.

### Brief description of the drawings

Several embodiments of the present invention are illustrated by way of figures, which do not limit the scope of the invention, wherein:
- figure 1 provides a workflow of the main method steps in accordance with a preferred embodiment of the invention (left), in conjunction with a schematic illustration of a system in accordance with a preferred embodiment of the invention (right);
- figure 2 provides a workflow of the main method steps in accordance with a preferred embodiment of the invention (left), in conjunction with a schematic illustration of a system in accordance with a preferred embodiment of the invention (right).

### Detailed description of the invention

This section describes features of the invention in further detail based on preferred embodiments and on the figures, without limiting the invention to the described embodiments. Unless otherwise stated, features described in the context of a specific embodiment may be combined with additional features of other described embodiments.

The description puts focus on those aspects of the proposed method and system that are relevant for understanding the invention. It will be clear to the skilled person that the system, for example, also comprises other commonly known aspects. These include for example an appropriately dimensioned power supply, the provision of a machine learning or neural network algorithm as such known in the art, etc... even if details of those aspects are not explicitly mentioned.

It should be noted that features described for a specific embodiment described herein may be combined with the features of other embodiments unless the contrary is explicitly mentioned.

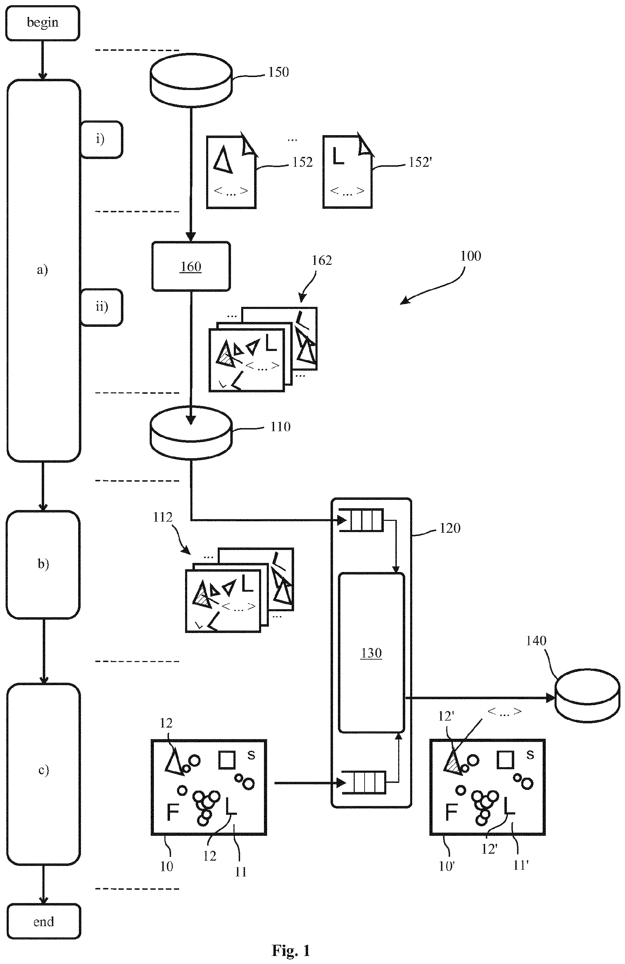

Figure 1 provides an illustration of the main method steps in accordance with a preferred embodiment of the invention, as well as the illustration of a preferred system 100 for implementing the feature detection method. A first method step a) comprises sub-steps i) and ii). During sub-step i) at least one digital template 152, which may be a data file comprising data that describes a predetermined image feature, which is to be detected in a digital image, is provided in a memory element or template store 150. The predetermined feature may for example be a geometric shape, an alphanumerical letter, a character string, or an imaged feature of a sample or surface, such as a cell imaged by a microscope, a crack in a solar cell film imaged by the electron beam induced current technique, or a licence plate on a cell phone photograph of a vehicle. Any feature that may be characterized by a limiting edge having for example differing contrast from its surrounding background in a digital image, may be described in the digital template. The nature of the feature depends on the application, i.e., on the detection task, in which the proposed method finds its use.

The data included in the digital template 152 comprises information on different visual aspects of the feature that is to be detected, such as size, texture and any other parameters that are useful for generating a computer-rendered model of the corresponding feature. While the data included in the digital template may be human-curated, it may alternatively be extracted automatically by a computer vision algorithm. In the example of figure 1, two templates describing the appearance of a triangle and the letter "L" are provided.

During sub-step ii), the information that is provided in the digital template or templates 152 is read by image generating means 160, which have at least read access to the template store 150, into a non-illustrated local memory element such as a hard disk drive, HDD, solid state drive, SSD, random access memory, RAM, or equivalent. The image generating means 160 preferably comprise an image generator, such as a data processor or a central processing unit, CPU, of a computing device, specifically programmed to achieve the desired functionality through appropriately formulated software code instructions. While the image generating means may be physically collocated with the template store 150, for example using a data bus within the same computing device, this is by no means a limiting example of the invention. The template store 150 may for example be accessible by the image generating means 160 through a non-illustrated networking interface and data communication channel, which allows both entities to be physically remote from one another. The image generating means 160 use the information from the template 152 to generate a plurality of synthetic training images 162. Each synthetic training image comprises at least one automatically labelled representation of the feature or features as described by said digital template(s). Preferably, the labelling information is provided in a separate textual data file, while the rendered image, which is preferably a two-dimensional image, but which may alternatively be a three-dimensional image, is stored in a graphics data file, both files making up the synthetic training image. The plurality of synthesized training images may be arbitrarily large. To this end, and in accordance with a preferred embodiment of the invention, the image generating means may be configured to randomly or systematically apply geometric transforms (scale variations, rotations, skewing, ...) and apply clustering or agglomerating models to render a synthetic training image. This ensures that the generated training images 162 are representative of a large array of potentially observable configurations of the predetermined features.

In accordance with a preferred embodiment of the invention, the image generating means 160 further use a background template, which comprises data that is representative of the visual appearance of atypical image comprising the predetermine feature(s), in areas that do not correspond to said features. The data may be a noise parameter, or it may comprise detailed lighting information that allows the image generating means to generate a synthetic training image that truthfully mimics a real image of a picturing the predetermined feature. By way of a nonlimiting example, if the predetermined feature is an alphanumeric string representing a licence plate number of a vehicle, the background template preferably comprises information that allows the image generating means 160 to emulate imaging of the licence plate under different daylight or atmospheric conditions (day/night, rain/fog/sunlight, etc...).

Step a) is completed by adding the generated synthetic training images to a training image store 110, preferably implemented using a structured memory element such as a database. The training image store 110 may comprise only synthetic training images, or a combination of synthetic training images and real imaged training images. All training images 112 are labelled and provide a 'ground truth' level of accurate information, providing the spatial position of each represented feature.

At method step b), a machine learning algorithm 130 is trained by data processing means 120. This is achieved by feeding the machine learning algorithm with the set of training images 112 comprising the synthetic training images 162. The machine learning algorithm is preferably a deep convolutional neural network for segmenting or partitioning an input image into predetermined feature on the one hand, and background patches on the other hand, as known in the art. The data processing means preferably comprise a data processor or a graphics processing unit, GPU, or a central processing unit, CPU, of a computing device, which is configured by appropriate software code instruction to perform the described functionalities. While the data processing means 120 may be implemented on the same processor as the image generating means 160, this configuration represents only one among many options within the scope of the present invention. Alternatively, both entities may for example be remote entities connected through a data communication channel, each having their dedicated computing resources in terms of available memory, storage and processing power.

While training the machine learning algorithm 130, the latter is fitted on the training data set 112. Specifically, during this phase, the internal parameters of the machine learning algorithm 130 are iteratively tuned to improve the algorithm's decision-making capabilities. In the case of a deep neural network, these internal parameters are known as 'weights' or weighted connections between neurons of the neural network.

In accordance with a preferred embodiment, at least one real 'validation' image is used during training, in order to prevent the network from overfitting on the synthetic training images. In machine learning, 'validation data' is used during the training process to estimate the model (i.e., trained or partially machine learning algorithm candidate) performance on unseen data, which is not strictly part of the training data. Therefore, after a full training iteration known as an epoch, the network performs a detection prediction on the validation data, which is not part of the training set used for training the machine learning algorithm. After several training epochs, the model or candidate algorithm that provides the best detection performance on the validation data is selected for the detection step on real, unseen data.

During the final method step c) a digital image 10 is obtained through imaging of a setting comprising the predetermined feature. Depending on the application and on the nature of the imaged feature, the image may be obtained through optical photography, through microscopy, including spectrometry, or through other appropriate and known imaging means. The image 10 is fed as input the trained machine learning algorithm 130. The image 10 may for example comprise the representation of a background 11 and a plurality of features (in the shown example: triangles and letters "L") 12, thereby forming a scene. Through the use of appropriate templates 152, the training images 162 are of similar general visual appearance as the image 10. The trained machine learning algorithm 130 is used to detect the predetermined features. The resulting data describing the detected representations of the predetermined features is then stored in a memory element 140, for example for further statistical analysis of the retrieved information content. Preferably, the resulting data comprises an image 10' corresponding to the input image 10, wherein the detected features 12' are localised through image partitioning against the detected background 11', and annotated with the respectively detected feature types.

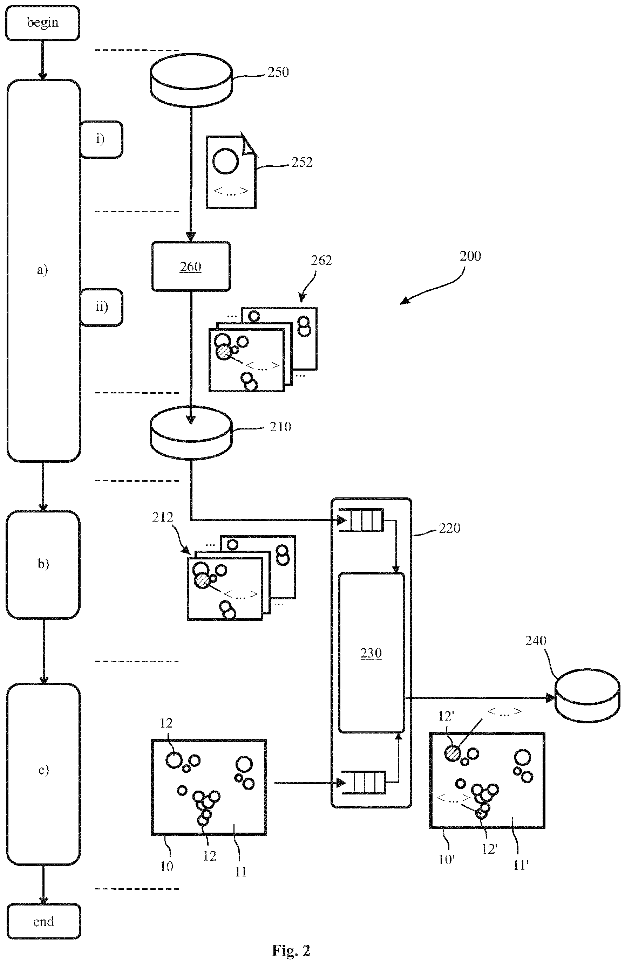

Figure 2 provides an illustration of the main method steps in accordance with another preferred embodiment of the invention, as well as the illustration of a preferred system 200 for implementing the method. The system implements a method for detecting representations of particles or nanoparticles in images that are obtained using different available microscopy techniques. A first method step a) comprises sub-steps i) and ii). During sub-step i) at least one digital template 252, which may be a data file comprising data that contains areas of varying contrast so that features such as a particle, for example a nanoparticle or a defect in an otherwise homogeneous matrix, that are to be detected in a digital image, are provided in a memory element or template store 250. The data included in the digital template 252 comprises information on different physical properties of the particle: the type of particle (TiO₂, Ag, SiO₂, ...), its size, which for different types of particles may preferably be expressed relative to a common reference, its texture and any other aspects and parameters that are useful for generating a computer-rendered model of the corresponding particle. While the data included in the digital template may be human-curated, it may alternatively be extracted automatically by a computer vision algorithm. The contrasting feature described in the template 252 typically depends on the imaging technique under consideration. By way of example, an Ag particle imaged using Helion Ion Microscopy, HIM will have a different visual appearance as the same particle imaged using Scanning Electron Microscopy, SEM or Optical Microscopy. Preferably, the template store 250 comprises a structured database in which at least one template for each considered particle/nanoparticle matched to various imaging techniques is stored.

During sub-step ii), the information that is provided in the digital template 252 is read by image generating means 260, which have at least read access to the template store 250, into a non-illustrated local memory element such as a hard disk drive, HDD, solid state drive, SSD, random access memory, RAM, or equivalent. The image generating means 260 preferably comprise an image generator, such as a data processor or a central processing unit, CPU, of a computing device, specifically programmed to achieve the desired functionality through appropriately formulated software code instructions. While the image generating means may be physically collocated with the template store 250, for example using a data bus within the same computing device, this is by no means a limiting example of the invention. The template store 250 may for example be accessible by the image generating means 260 through a non-illustrated networking interface and data communication channel, which allows both entities to be physically remote from one another. The image generating means 260 use the information from the template 252 to generate a plurality of synthetic training images 262. Each synthetic training image comprises at least one automatically labelled representation of a particle or nanoparticle as described by said digital template. Preferably, the labelling information is provided in a separate textual data file, while the rendered image, which is preferably a two-dimensional image, but which may alternatively be a three-dimensional image, is stored in a graphics data file, both files making up the synthetic training image. The plurality of synthesized training images may be arbitrarily large. To this end, and in accordance with a preferred embodiment of the invention, the image generating means may be configured to randomly or systematically apply geometric transforms (scale or shape variations, rotations, skewing, ...) and apply clustering or agglomerating models to render a synthetic training image. This ensures that the generated training images 262 are representative of a large array of potentially observable particle and nanoparticle configurations. While a single template 252, representing a single type of particle or nanoparticle, may be used to generate a given synthetic training image, this is not a limitation of the invention. Different templates 252 may be selected (for example by a user through a user-interface of the image generating means 260) for generating a single synthetic training image. The resulting training image then comprises a combination of a plurality of particles or nanoparticles. The mixing ratio may further be a user-defined parameter.

In accordance with a preferred embodiment of the invention, the image generating means 260 further use a background template, which comprises data that is representative of a visual sample or substrate background. The data may be a noise parameter, or it may comprise detailed lighting information that allows the image generating means to generate a synthetic training image that truthfully mimics a real image of a corresponding sample carrying particles or nanoparticles.

Step a) is completed by adding the generated synthetic training images to a training image store 210, preferably implemented using a structured memory element such as a database. The training image store 210 may comprise only synthetic training images, or a combination of synthetic training images and real imaged training images. In a preferred embodiment, the training set 212 comprises one real imaged training image, together with the plurality of synthetic training images 262. In any case, all training images 212, both real and synthetic 262, are labelled and provide a 'ground truth' level of accurate information, providing e.g. the spatial position of each represented particle, and its type or species.

At method step b), a neural network algorithm 230 is trained by data processing means 220. This is achieved by feeding the neural network with the set of training images 212 comprising the synthetic training images 262. The neural network is preferably a deep convolutional neural network for segmenting an input image into particles or nanoparticles on the one hand, and background patches on the other hand, as known in the art. The data processing means preferably comprise a data processor or a graphics processing unit, GPU, or a central processing unit, CPU, of a computing device, which is configured by appropriate software code instruction to perform the described functionalities. While the data processing means 220 may be implemented on the same processor as the image generating means 260, this configuration represents only one among many options within the scope of the present invention. Alternatively, both entities may for example be remote entities connected through a data communication channel, each having their dedicated computing resources in terms of available memory, storage and processing power.

While training the neural network 230, the latter is fitted on the training data set 212. Specifically, during this phase, the internal parameters of the neural network 230 are iteratively tuned to improve the network's decision-making capabilities. These internal parameters are known as 'weights' or weighted connections between neurons of the neural network.

In accordance with a preferred embodiment, at least one real 'validation' image is used during training, in order to prevent the network from overfitting on the synthetic training images. In machine learning, 'validation data' is used during the training process to estimate the model (i.e., trained or partially trained neural network instance) performance on unseen data, which is not strictly part of the training data. Therefore, after a full training iteration known as an epoch, the network performs a detection prediction on the validation data, which is not part of the training set used for training the neural network. After several training epochs, the model that provides the best detection performance on the validation data is selected for the detection step on real, unseen data.

The selection may for example be based on the F1 score, also known as the Dice similarity index, or on any other appropriate metrics known in the art. By way of example The F1 score is defined by the following metrics: Accuracy=(TP+TN)/(TP+FP+TN+FN), Precision=TP/(TP+FP), Recall=TP(TP+FN), and finally F1 = (2 ^{∗} TP)/(2^{∗}TP+FP+FN), wherein true positives, TP, and true negatives, TN, denote pixels that are classified correctly as particles or background respectively. False positives, FP, and false negatives, FN, are misclassified pixels that do not appear in an expert-curated ground truth segmentation of the validation data. The values for these measures vary from 0 to 1, while a value of 0 represents the worst possible accuracy whereas 1 denotes a perfect segmentation result. Typical, an F1 score of at least 0.7 is considered as resulting from a good segmentation.

During the final method step c) a digital image 10 obtained through imaging of a sample using Secondary Ion Mass Spectrometry, SIMS, HIM or SEM or optical microscopy or photography, without being limited to these imaging modalities, is fed as input the trained neural network algorithm 230. The image 10 may for example comprise the representation of a background 11 and a plurality of particles or nanoparticles 12, thereby forming a scene. Through the use of appropriate templates 252, the training images 262 are of similar general visual appearance as the image 10. The trained neural network algorithm 230 is used to detect particles. The resulting data describing the detected particles or nanoparticles is then stored in a memory element 240, for example for further statistical analysis of the retrieved information content. Preferably, the resulting data comprises an image 10' corresponding to the input image 10, wherein the detected particles or nanoparticles 12' are localised through image segmentation against the detected background 11', and labelled with the respectively detected particle types.In order to validate the proposed method, a particular embodiment has been implemented, which will be described hereafter without limiting the invention thereto. Based on an image representing TiO₂ nanoparticles, which is acquired using HIM imaging, data describing the depicted shapes, appearance and distribution of particles are extracted to form a digital template. This information may be retrieved by a human curator, or automatically, using appropriate computer vision algorithms. The digital template may be stored in textual form, or it may be stored as a 3D rendering model, so that the digital template allows for generating digital objects which roughly match the appearance of the target TiO₂ nanoparticles. In addition, a virtual template scene, comprising imaging background information and lighting conditions, is generated from the image. Using a 3D rendering software, such as for example Blender^{™}, a plurality of scenes are generated based on the aforementioned digital template. From each scene, at least one two-dimensional synthetic image is then generated, as rendered from a predetermined viewpoint. The 3D rendering task is preferably orchestrated by a computing script (a python script in the case of Blender), which automatically generates a large number of different synthetic images, by randomly duplicating particles, scaling, or rotating particles, or creating distributions or agglomerations of represented particles. The resulting synthetic training images are stored in a training image store. In order to further increase the amount of training data, aspects of domain randomization, varying lighting conditions, as well as data augmentation techniques may be used. Data augmentation comprises creating additional training images by applying rotations, flipping, zoom, intensity variations, or by adding noise to any of the generated synthetic training images. At the time of writing, it was possible to generated 180 corresponding synthetic training images, including their inherently accurate segmentation and labelling, in less than 6 hours using currently state-of-the-art processing hardware.

Different sets of training images have been generated based on HIM images SiO₂, TiO₂ and Ag particles. While real SiO₂ particles mostly comprise a well-arranged spatial particle distribution and a spherical shape, which was accounted for in the design of the corresponding digital template, the corresponding simulations followed random particle distributions with random localizations to generate a more complex particle distribution, as compared to real images. TiO₂ particles on the other hand form spatial agglomerates and have complex shapes which cannot be reduced to a single type. Therefore, in order to cover these aspects in the synthetic data, four different digital templates were created, which were randomly combined to agglomerates in the rendered scene. This method achieved accurate mimicking of the characteristics of the target particles in terms of shape and visual appearance, whereas the synthetic training images comprised a more complex localization for the particles. Additionally, due to the presence of substrate surface impurities (dirt) in some HIM images, a randomized impurity texture has been added to the generated images, to account for such artefacts. Contrary to manually annotated images, synthetic labels do not contain any mislabeling and provide quasi-error-free and consistent particle contour lines,

The detection method in accordance with the present embodiment has been implemented based on the U-net architecture. This architecture provides a framework for biomedical image segmentation, see for example Ronneberger et. al: "U-net: Convolutional networks for biomedical image segmentation" in International Conference on Medical image computing and computer-assisted intervention, 234-241 (Springer, 2015), which is hereby incorporated by reference in its entirety. A U-net is a TensorFlow framework. The same number of feature maps for the encoder and decoder part have been used. Solely the cropping operation has been excluded from the skip connections and only one filter kernel has been applied in the last 1x1 convolution layer at the end of the decoder part. Additionally, batch normalization has been applied after each convolutional layer to reduce overfitting and to stabilize the learning process. The weights have been initialized with the method proposed by He and al, see "Delving deep into rectifiers: Surpassing human-level performance on imagenet classification" in Proc. of the IEEE international conference on computer-vision, 1026-1034 (2015). As activation function, the rectified linear unit has been used, as proposed in Glorot et al. "Deep sparse rectifier neural networks" Proc. of the 14th international conference on AI and statistics, 315-323 (2011). The training of the network has been performed using Stochastic Gradient Descent, SGD, with a patch size of 400x400 pixels and a mini-batch size of 2. Each image in the training batch was generated by sub-sampling a randomly chosen image from the synthetic training data set. Prior to feeding the mini-batch into the network, data augmentation was applied as described previously. The number of iterations was set to 150. The U-net trained on the simulated data only used 180 synthetic images in the training set for 500 epochs. To compute a representative probability map as network output, a pixel-wise sigmoid was applied on its last feature map. The pixel-wise sigmoid is defined as *p(x)=1*/*(1* +*e^{-x}),* where x denotes the pixel intensity. The binary segmentation mask has been extracted using a threshold of 0.51 for the probability map.

Using the setup in accordance with this embodiment, it was possible to provide almost perfect segmentations in comparison to manually annotated ground-truth segmentations. Although trained only on synthetic training data, the convolutional neural network that was used, became capable of achieving segmentation accuracies on real HIM data, which is not only comparable to a CNN trained on real data, but also to the segmentation capability of humans. Therefore, the capabilities of CNNs for image segmentation tasks are leverages by the proposed method.

Based on the description and on the figures that have been provided, a person with ordinary skills in the art will be enabled to provide a computer program for implementing the described methods without undue burden and without exercising any additional inventive skill.

It should be understood that the detailed description of specific preferred embodiments is given by way of illustration only, since various changes and modifications within the scope of the invention will be apparent to the skilled person. The scope of protection is defined by the following set of claims.

## Claims

1. Method for detecting at least one representation of a predetermined feature (12) in a digital image (10) of a sample, the method comprising the steps of:
a) in a training image store (110), providing a set of training images (112), wherein each training image comprises at least one labelled representation of said at least one feature;
b) using data processing means (120), training a machine learning algorithm (130) using said set of training images (112);
c) detecting a representation of said at least one predetermined feature (12) in said digital image (10) using said trained machine learning algorithm (130) and storing data (10') describing the detected feature representations (10') in a memory element (140);
wherein the provision of a set of training images further comprises the steps of:
i) providing at least one digital template (152), which comprises data indicative of the visual appearance of said at least one predetermined feature (10) that is to be detected, in a template store (150);
ii) generating, using image generating means (160), a plurality of synthetic training images (162) based on said at least one digital template (152), wherein each synthetic training image comprises at least one labelled representation of a feature described by said at least one digital template, and adding the synthetic training images (162) to the set of training images (112).

2. Method according to claim 1, wherein the data in said digital template (152) describes the visual appearance that becomes apparent when a corresponding feature (12) is imaged using the imaging technique according to which said digital image (10) has been obtained.

3. Method according to any of claims 1 or 2, wherein the step of generating synthetic training images (162) further comprises, using said image generating means (160), generating a background of said synthetic training images, wherein the background emulates the visual appearance of a sample area not showing said predetermined feature, that becomes apparent when a sample is imaged using the imaging technique according to which said digital image (10) has been obtained.

4. Method according any of claims 1 to 3, wherein a synthetic training image (162) comprises a plurality of representations of said predetermined feature, which are generated by applying geometric transforms to the data comprised in the corresponding digital template (152).

5. Method according to any of claims 1 to 4, wherein said set of training images (112) comprises at least one real labelled digital image comprising said predetermined feature, which has been obtained by imaging a sample.

6. Method according to any of claims 1 to 5, wherein the step of detecting said predetermined feature in said digital image (10) comprises partitioning the digital image into features (12') and background (11'), and labelling each feature using said machine learning algorithm (130).

7. Method according to any of claims 1 to 6, wherein the machine learning algorithm (130) comprises a convolutional neural network algorithm.

8. Method according to any of claims 1 to 7, wherein said step of training the machine learning algorithm (130) comprises generating a plurality of trained candidate algorithms using different training epochs, and selecting one trained candidate algorithm out of said plurality based on an indication of their respective feature detection performance, for carrying out said step of detecting said predetermined feature in said digital image (10).

9. Method according to any of claims 1 to 8, wherein said predetermined feature comprises a particle or nanoparticle, and wherein said digital template (152) for a particle or nanoparticle comprises data describing its physical properties.

10. Method according to claim 9, wherein a synthetic training image (162) comprises clusters of particles or nanoparticles.

11. Method according to any of claims 9 or 10, wherein the digital image (10) is obtained through secondary ion mass spectrometry, SIMS, scanning transmission ion microscopy, STIM, scanning electron microscopy, SEM, or Helium Ion Microscopy, HIM, optical microscopy or photography, imaging of a sample comprising particles or nanoparticles (12).

12. A system (100) for detecting at least one representation of a predetermined feature in a digital image (10) of a sample, wherein the system comprises data processing means (120) being configured for accessing a training image store (110) that comprises a set of training images (112), wherein each training image comprises at least one labelled representation of said at least one feature, a memory element for storing said digital image, and image generating means (160) being configured for accessing a digital template store (150) that comprises at least one digital template (152) storing data that is indicative of the visual appearance of said at least one predetermined feature that is to be detected, wherein the data processing means (120) are configured for:
b) training a machine learning algorithm (130) using said set of training images (112);
c) detecting a representation of said at least one predetermined feature in said digital image (10) using said trained machine learning algorithm, and storing data (10') describing the detected feature representation in a memory element (140);
and wherein the image generating means (160) are configured for:
ii) generating a plurality of synthetic training images (162) based on said at least one digital template (152), wherein each synthetic training image comprises at least one labelled representation of a feature described by said at least one digital template, and adding the synthetic training images (162) to the set of training images (112).

13. The system according to claim 12, wherein the system is further configured to carry out any of the method steps in accordance to any of claims 2 to 11.

14. A computer program comprising computer readable code means, which when run on a computer system, causes the computer system to carry out the method according to any of claims 1 to 11.

15. A computer program product comprising a computer-readable medium on which the computer program according to claim 14 is stored.
